# EUROPEAN PATENT SPECIFICATION

(11) **EP 2 666 695 B1**
(45) Date of publication and mention of the grant of the patent: **03.12.2014**
(21) Application number: 12169674.4
(22) Date of filing: 26.05.2012
(51) Int. Cl.: B61C 17/04

(54) **Driver's desk provided with energy absorption means for a rail vehicle**
Fahrerpult mit Energieabsorptionsmitteln für ein Schienenfahrzeug
Bureau de conducteur fourni avec des supports d'absorption d'énergie pour véhicule ferroviaire

(43) Date of publication of application: 27.11.2013
(73) Proprietor: Bombardier Transportation GmbH, 10785 Berlin (DE); Université de Valenciennes et du Hainaut-Cambresis, 59313 Valenciennes Cedex 9 (FR); Stratiforme Industries, 59235 Bersee (FR)
(72) Inventor: Landsheere, Christophe, 59133 Phalempin (FR); Morvan, Hervé, 59590 Raismes (FR); Marhem, Vincent, 62217 Beaurains (FR)
(74) Representative: Bugnion Genève

(56) References cited:
- EP-A1- 0 952 063
- EP-A1- 1 526 055
- EP-A1- 2 070 801
- FR-A1- 2 918 617

## Description

### TECHNICAL FIELD OF THE INVENTION

This invention relates to a driver's desk for a rail vehicle, in particular a high-speed vehicle, provided with means to protect the driver and limit the risks of injury during an extreme deceleration or collision.

### BACKGROUND ART

A padded driver's desk for a rail vehicle is disclosed in EP 2 070 801 A. The driver's desk includes a leg area and a console board protruding upwards from the leg area. The leg area is made of a plastically deformable material without massive structure and is covered with a leg cushion. Similarly a portion of the console board facing the belly of the driver is made of plastically deformable material without massive structure and is covered with a belly cushion. The console also includes a head area covered with a head cushion. The cushions are preferably made of silicone or rubber materials with air cavities. While the plastically deformable zones and padding of the driver's desk may reduce the injuries to the driver, no particular precautions are taken to control the motion of the driver's body during an impact. In particular, a rotation motion of the body, potentially resulting in an impact of the head with the head cushion, is not prevented.

A driver's protection device for a rail vehicle is disclosed in EP 2 165 905. The device has a shock-detecting unit for detecting a shock, and a displacement unit displacing a mobile impact portion of a control stand during the shock. The mobile portion is displaced from an initial position towards a final position such that an impact portion is arranged opposite to a less sensitive zone i.e. thorax of a body of the driver in its final position. This arrangement does not take into account the lower part of the body and the actual motion of the body of the driver during the shock is not controlled. In particular, rotation of the body is not prevented. There is a risk of injury if the lower part of the body is projected towards the lower part of the control stand while the upper part of the body is stopped by the mobile impact portion, resulting in a backward rotation motion of the body.

Hence, there is a need for a driver's desk that allows a better control of the motion of the driver's body during a collision.

### SUMMARY OF THE INVENTION

According to one aspect of the invention, there is provided a driver's desk assembly for a rail vehicle, comprising a driver's seat and a desk subassembly located in front of the driver's seat, the desk subassembly being provided with a driver machine interface for controlling the rail vehicle, with at least one lower energy-absorbing device located such as to face the legs of a driver sitting on the seat and at least one upper energy-absorbing device located such as to face the torso or belly of the driver sitting on the seat, at least one and preferably each one of the upper and lower the energy-absorbing devices comprising a contact zone protruding towards the driver sitting on the seat and at least one permanently deformable energy-absorbing zone sandwiched between the movable contact zone and a rigid support part of the driver's desk assembly.

In the event of a frontal impact the energy-absorbing devices absorb the kinetic energy of the driver. The energy-absorbing zone may, in particular, include a honeycomb and/or metallic foam material with energy absorbing capability by plastic deformation.

The contact zone may include a rigid element covered with a cushion or a bolster to dampen the impact of the driver on the contact zone. However, the contact zone should preferably not permanently deform during the impact.

As the initial motion of the body relative to driver's desk during a frontal collision is a translation towards the desk substantially parallel to a longitudinal horizontal axis corresponding to the direction of deceleration of the driver's desk, the movable contact zones are preferably movable at least in a general direction parallel to this frontal direction. Guide means may be provided for guiding the movable contact zone of at least one and preferably both of the energy-absorbing devices along a rectilinear or curvilinear path with respect to the rigid support part when the permanently deformable energy-absorbing zone is crushed. Hence, the motion of the contact zone upon an impact is controlled, which in turn means that the motion of the driver's body is better controlled during the impact.

Preferably, both of the energy-absorbing devices are mounted on the rigid support part of the desk assembly independently from one another and so that they can be easily and independently replaced or adapted as far as necessary.

For the purpose of the present application, any reference to the driver's body shall comprise a reference to at least a 50^{th} percentile male Hybrid III dummy modelling the driver's body and preferably as a reference to any dummy's body chosen in a set of three dummies including a 50^{th} percentile male Hybrid III dummy, a 95^{th} percentile male Hybrid III dummy and a 5^{th} percentile female Hybrid III dummy.

The respective stiffness and stroke of each of the energy-absorbing devices can be determined as a result of crash tests and/or by an optimisation calculation in biomechanics, implemented with e.g. a MADYMO® dummy model coupled to a finite-element solver.

More specifically, each energy-absorbing device has a behaviour, which can be characterised by a specific force vs. stroke diagram in predetermined conditions. As a result of the frontal deceleration pulse, the driver undergoes a translational motion toward the desk. The aim of the system is to stop the driver by controlling his kinematics to reduce the levels of injuries. At the end of the impact, the energy-absorbing devices have undergone plastic deformation to absorb the kinematic energy and the driver has been stopped and has moved back to the sitting position. When the thorax or abdomen of the driver impacts the upper energy-absorbing device, the latter, depending on the force level, undergoes plastic deformation along a horizontal axis. Similarly, the driver's knees impact the lower energy-absorbing device which, depending on the force level, undergoes plastic deformation along a horizontal axis.

According to a preferred embodiment, the lower and upper energy absorbing devices are such as to absorb, upon a frontal collision generating a deceleration pulse of 5 g during 100 ms, the kinetic energy of a leg region and a torso region of a driver or dummy being pushed out of the driver's seat and impacting the desk subassembly, thereby causing a deformation of the two separate energy absorbing zones such that a bending of the driver's or dummy's body and therefore a movement of a head region of the driver's or dummy's body towards the desk subassembly are reduced.

Preferably, the separate energy-absorbing devices have dissipative deformation capabilities such as to limit the rotation of the torso region of the driver's or dummy's body relative to the pelvis such that the head impact criteria (HIC) is less than 50 during the frontal collision. This means that the respective stiffness and stroke of each of the energy-absorbing devices have to be matched with one another.

Preferably, the separate energy-absorbing devices have positions and dissipative deformation capabilities such as to allow only a translation of the driver's or dummy's body during the front collision. The strokes and stiffness of each of the upper and lower energy-absorbing devices are chosen such that rotation of the driver's or dummy's body, be it forward or backward, is prevented.

It has been observed that when the distance between the knee bolster and femurs is too small, the dummy torso rotates and the head impacts the desk. When the distance between the knee bolster and the dummy legs is too great, the motion of the knees and femurs is not restrained and the impact velocity of the thorax against the desk is not significantly reduced. Preferably, the contact zone of the lower energy-absorbing device is located at a distance from the knees of the driver's or dummy's body in the sitting position, which is between 85% and 115% of the distance between the contact zone of the upper energy-absorbing device and the belly of the driver's or dummy's body. With such an arrangement the contact is almost simultaneous with the lower and upper energy-absorbing devices and the subsequent deceleration of the torso and legs can be controlled such as to limit the rotation of the torso with respect to the legs and prevent the head from colliding with the driver's desk.

The sitting position of the dummy's body for the test should preferably comply with the requirements of UIC 651. If the vehicle is provided with a deadman foot switch or driver's alertness foot pedal, the dummy's position should preferably be with the foot or feet on the switch or pedal(s). The distance between the driver seat and the lower energy-absorbing device should preferably be set between 300 and 600mm. This range of values is chosen so as to not hamper foot switches in the driver leg room and to meet standard recommendations. A distance of 390 mm between the contact zone of the lower energy-absorbing device and the seat has proved optimal. Obviously, the position of the eyes of the driver or dummy should be such as to give an optimum visual field through a windshield of the driver's cab.

Preferably, the upper energy-absorbing device has a stiffness such as to limit an abdomen deflection and a thoracic deflection measured on the dummy's body to less than 63 mm, and preferably less than 50 mm during the frontal collision. This will define an upper limit to the stiffness of the upper energy-absorbing device.

Depending on the desk / seat configuration setup, the upper energy-absorbing device is preferably located at the height and in front of the torso of the driver sitting on the seat, or at the height and in front of the abdomen of the driver sitting on the seat.

Preferably, the lower energy-absorbing device has a position and stiffness such as to limit a femur axial force measured on the on the dummy's body to less than 8 kN. Preferably, the lower energy-absorbing device is located at the height and in front of the knees and/or legs of a driver sitting on the seat. The lower energy-absorbing device may include two separate knee bolsters. The lower energy-absorbing device is preferably adjustable in height and length on account of various drivers' measurements.

Each energy-absorbing device is designed to crunch or collapse during the impact but only when subjected to a force or pressure above a predetermined threshold. The energy-absorbing device should withstand lower impacts, which can occur under normal operating conditions, without permanent deformation. Obviously, the threshold should be below the acceptable limit for the corresponding part of the dummy's body, but high enough to avoid undesired deformations, e.g. at a level between 50% and 80% of the acceptable limit. In particular, if the limit for an acceptable femoral axial force measured on the on the dummy's body is set to 8 kN, the energy-absorbing zone of the lower energy-absorbing device should start to undergo permanent deformation below 8kN and preferably between 4 and 6,4 kN, preferably as soon as the femoral axial force reaches 4 kN. Similarly, if the limit for an acceptable pressure measured on the dummy's torso is set to 3 kN, the energy-absorbing device should start deforming below 3kN, and preferably when an axial force measured on the driver's or dummy's torso impacting the contact zone of the upper energy-absorbing device reaches a threshold value set between 1 and 2,4 kN. The thresholds of the upper and lower energy-absorbing devices can be defined by the mechanical properties of the energy-absorbing zone or by specific rated breakable attachment means between the contact zone and a non deformable part of the desk subassembly.

According to a preferred embodiment, the driver's desk assembly is provided with a collision detector and the driver's seat is provided with guiding means and an actuator for guiding the driver's seat towards the desk subassembly upon a collision. The motion of the seat supports the translational movement of the body and prevents the driver from falling back or down. The collision detector can also be linked to a mechanism as disclosed in EP 2 165 905 for raising the contact zone of the upper energy-absorbing device at the level of the torso.

According to another aspect of the invention, there is provided a driver's desk assembly for a rail vehicle, comprising a driver's seat and a desk subassembly located in front of the driver's seat, the desk subassembly being provided with a driver machine interface for controlling the rail vehicle, with at least one lower energy-absorbing device located such as to face the legs of a driver sitting on the seat and at least one upper energy-absorbing device located such as to face the belly or torso of the dummy sitting on the seat, wherein the driver's desk assembly is provided with a collision detector and the driver's seat is provided with guiding means and an actuator for guiding the driver's seat towards the desk subassembly upon a collision. The motion of the seat supports the translational movement of the body and prevents the driver from falling back or down.

According to another aspect of the invention, there is provided a driver's desk assembly for a rail vehicle, comprising a driver's seat and a desk subassembly located in front of the driver's seat, the desk subassembly being provided with a driver machine interface for controlling the rail vehicle, wherein the desk subassembly is provided with at least two separate energy-absorbing devices, including at least one lower energy-absorbing device and at least one upper energy-absorbing device located at different heights for absorbing, upon a frontal collision generating a deceleration pulse of 5 g during 100 ms, the kinetic energy of a leg region and a torso region of a driver.

According to another aspect of the invention, there is provided a method for protecting a driver in a rail vehicle comprising a driver's seat and a desk subassembly located in front of the driver's seat and provided with a control device for manually controlling the rail vehicle, the method comprising: providing the desk subassembly with at least two separate energy-absorbing devices, including at least one lower energy-absorbing device and at least one upper energy-absorbing device located at different heights for absorbing, upon a frontal collision generating a deceleration pulse of 5 g during 100 ms, the kinetic energy of a leg region and a torso region of a driver.

According to another aspect of the invention, there is provided a method for designing de driver's desk assembly for a rail vehicle, wherein the driver's desk includes a driver's seat and a desk subassembly located in front of the driver's seat and provided with a control device for manually controlling the rail vehicle, the method comprising: providing the desk subassembly with at least two separate energy-absorbing devices, including at least one lower energy-absorbing device and at least one upper energy-absorbing device located at different heights for absorbing, upon a frontal collision generating a deceleration pulse of 5 g during 100 ms, the kinetic energy of a leg region and a torso region of any dummy's body chosen in a set of three dummies including a 50th percentile male Hybrid III dummy, a 95th percentile male Hybrid III dummy and a 5th percentile female Hybrid III dummy, sitting on the driver's seat without a head region of the dummy's body impacting the desk subassembly.

### DESCRIPTION OF THE FIGURES

An illustrative embodiment of the invention will now be described, purely by way of example and without limitation to the scope of the claims, and with reference to the accompanying drawings, in which:
- Fig. 1 is a schematic diagram of a driver's desk assembly according to one embodiment of the invention;
- Fig. 2 is a schematic diagram of the driver's desk assembly of Fig. 1, during a frontal collision, before the energy-absorbing devices are released;
- Fig. 3 is a schematic diagram of the driver's desk assembly of Fig. 1, after the energy-absorbing devices have undergone plastic deformation.

Corresponding reference numerals refer to the same or corresponding parts in each of the figures.

### DETAILED DESCRIPTION OF PREFERED EMBODIMENTS

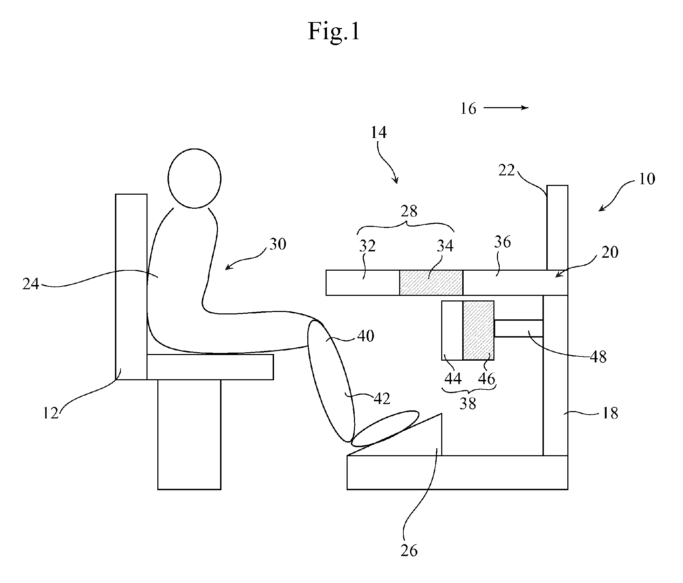

Referring to Figure **1**, a driver's desk assembly **10** for a driver's cabin of a rail vehicle includes a driver's seat **12** and a driver's desk subassembly **14** located in front of the seat **12** in a longitudinal direction **16** of the vehicle. Optionally, the desk subassembly **14** and the driver's seat **12** may be fixed to a common base plate (not shown) to form a modular subunit that can be preassembled and mounted as such on the vehicle. The driver's desk subassembly **14** is provided with a lower structure **18** and a console **20** provided with control screens and primary controls **22.** The body **24** of a driver (or of a dummy) has been illustrated in Fig. **1****.** The feet of the driver rest on a footrest or a deadman pedal **26.**

An upper energy-absorbing device **28** is integrated to the console **20** and protrudes towards the torso **30** of the driver **24** in the sitting position. The upper energy-absorbing device **28** includes a contact zone **32** directly facing the torso **30** (in this case, more specifically the abdomen) of the driver **24** in the sitting position, and an energy-absorbing zone **34** located between the contact zone **32** and a non-deformable zone **36** of the console **20.**

The lower structure **18** of the driver's desk assembly **10** is provided with a lower energy-absorbing device **38**, which protrudes towards the knees **40** and legs **42** of the driver **24.** The lower energy-absorbing device **38** comprises a contact zone **44** facing the knees **40** and legs **42** of the driver and an energy-absorbing zone **46** sandwiched between the contact zone **42** and a non-deformable zone **48** of the lower structure **18.**

The energy-absorbing zones **34, 46** of the upper and lower energy-absorbing devices **28, 38** include a permanently deformable material, such as a honeycomb structure or a metallic foam. Each contact zone **32, 44** consists of a non-deformable element covered with a soft cushion facing the driver **24.** The non-deformable element may be supported on a pair of guiding rails (not shown) to control the path of motion of the contact zone **32, 44** and the deformation of the corresponding energy-absorbing zones **34, 46.**

Each energy-absorbing zone **34, 44** has a plastic deformation threshold, which ensures that small impacts on the contact zones will not result in a permanent deformation of the energy-absorbing zones **34, 46.** Alternatively, one or both of the contact zones **32, 44** may be fixed to the lower structure **18,** respectively to the console **20,** by means of mechanical connections providing rated breaking points, which break when a predetermined force threshold is reached, to allow the subsequent movement of the contact zones **32, 44** and the plastic deformation of the energy-absorbing zones **34, 46.**

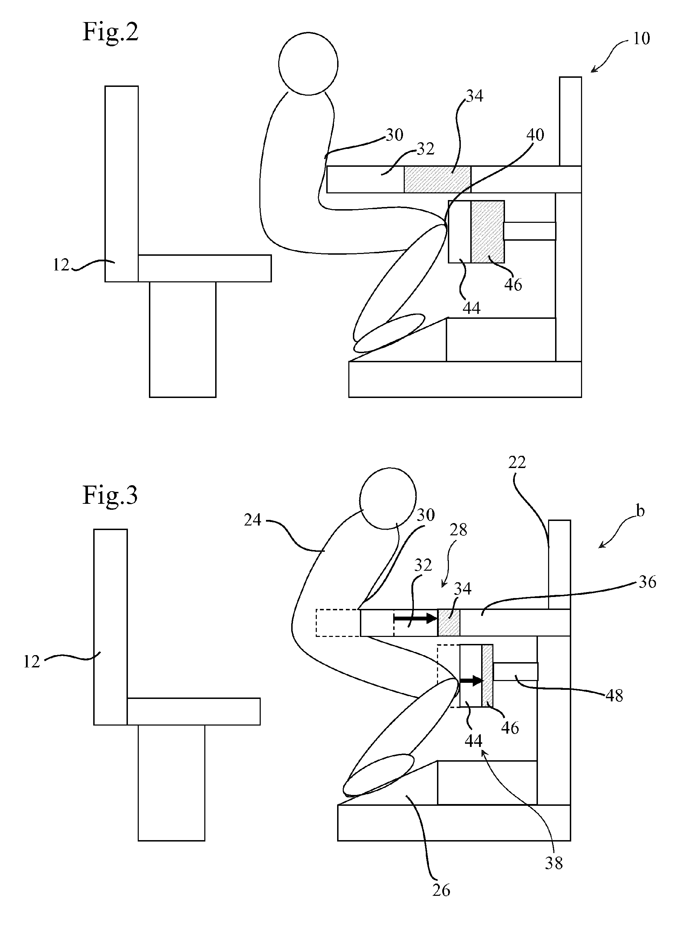

Upon a frontal collision, the body **24** of the driver is subjected to a translation towards the desk assembly **10** parallel to the longitudinal direction **16.** In a first phase of the translation (Fig.2), the abdomen **30** and knees **40** touch the corresponding contact zones **32, 44** of the desk assembly **10** without substantial deformation of the energy-absorbing zones **34, 46.** After this first phase and depending on the energy of the impact, the plastic deformation threshold or force threshold is reached and the energy-absorbing zones **34, 46** jointly start to deform to dissipate the kinetic energy of the driver's body and decelerate the driver's body (Fig.3), while the contact zones **32, 44** undergo a translation movement substantially parallel to the direction **16** without deformation.

The stiffness and stroke of each energy-absorbing zone **34, 36** are chosen such as to limit the torso rotation towards the console, avoid a head impact, reduce the thoracic, resp. abdomen deflection below 63mm, resp. 40mm and preferably below 50 mm, resp. 35mm, limit the femur axial force to 8kN or less, and prevent the driver's body **24** from slipping under the console.

While the above example illustrates a preferred embodiment of the present invention it is noted that various other arrangements of the driver's desk assembly **10** may also be considered, which fall within the scope of the appended claims. In particular, the lower energy-absorbing device **38** may be fixed to a lower structure of the driver's desk assembly that is structurally independent from the console **20** itself. The lower energy-absorbing device **38** may include more than one contact zone, e.g. one for each knee or leg region, which may be attached to a common energy-absorbing zone or to two independent energy-absorbing zones. The lower energy-absorbing device may be adjustable with respect to the seat in the longitudinal and/or vertical directions. The primary controls **22** may include switches and various displays located in front of the driver as well as control levers that are preferably located laterally to avoid any protruding lever in front of driver.

## Claims

1. A driver's desk assembly for a rail vehicle, comprising a driver's seat (12) and a desk subassembly (14) located in front of the driver's seat (12), the desk subassembly (14) being provided with a driver machine interface (22) for controlling the rail vehicle, at least one lower energy-absorbing device (38) located such as to face the knees of a driver sitting on the driver's seat (12) and at least one upper energy-absorbing device (28) located such as to face the torso of the driver sitting on the driver's seat (12), **characterised in that** at least one of the upper and lower energy-absorbing devices (28, 38) comprises at least one movable contact zone (32, 44) protruding towards the driver sitting on the seat and at least one permanently deformable energy-absorbing zone (34, 46) sandwiched between the movable contact zone and a rigid support part of the driver's desk assembly.

2. The driver's desk assembly of claim 1, **characterised in that** at least one energy-absorbing zone (34, 46) includes a honeycomb and/or metallic foam material with energy absorbing capability by plastic deformation.

3. The driver's desk assembly of any one of the preceding claims, **characterised in that** each movable contact zone (32, 44) includes a rigid element covered with a bolster facing the driver's body.

4. The driver's desk assembly of any one of the preceding claims, **characterised in that** it further comprises guide means for guiding the movable contact zone (32, 44) along a rectilinear or curvilinear path with respect to the rigid support part.

5. The driver's desk assembly of any one of the preceding claims, characterised the upper and lower energy-absorbing devices are independently replaceable.

6. The driver's desk assembly (10) of any one of the preceding claims, **characterised in that** the lower and upper energy absorbing devices (28, 38) are such as to absorb, upon a frontal collision generating a deceleration pulse of 5 g during 100 ms, the kinetic energy of a leg region (42) and a torso region (30) of a driver being pushed out of the driver's seat (12) and impacting the desk subassembly, thereby causing a deformation of the two separate energy absorbing zones such that a bending of the driver's body and therefore a movement of a head region of the driver's body towards the desk subassembly (14) are reduced.

7. The driver's desk assembly of any one of the preceding claims, **characterised in that** the two energy-absorbing devices (28, 38) have dissipative deformation capabilities, in particular plastic deformation capabilities, such as to limit the rotation of the torso region (30) of the driver's body relative to the pelvis such that the head impact criteria (HIC) is less than 50 during the frontal collision.

8. The driver's desk assembly of any one of the preceding claims, **characterised in that** the energy absorbing zones (34, 46) of the two energy-absorbing devices (28, 38) have dissipative deformation capabilities such as to allow only a translation of the driver's body during the collision.

9. The driver's desk assembly of any one of the preceding claims, **characterised in that** the upper energy-absorbing zone (34) has a stiffness such as to limit an abdomen deflection and a thoracic deflection measured on a dummy modelling the driver, respectively to less than 40mm and less than 63 mm, and preferably respectively to less than 35 mm and less than 50 mm during the frontal collision.

10. The driver's desk assembly of any one of the preceding claims, **characterised in that** the upper energy-absorbing device (28) is located at the height and in front of the torso (30) and/or of the abdomen of the driver sitting on the seat.

11. The driver's desk assembly of any one of the preceding claims, **characterised in that** the lower energy-absorbing device has a position and the energy absorbing zone (46) has a stiffness such as to limit a femur axial force measured on a dummy modelling the driver to less than 8 kN.

12. The driver's desk assembly of any one of the preceding claims, **characterised in that** the lower energy absorbing device is adjustable in height and length.

13. The driver's desk assembly of any one of the preceding claims, **characterised in that** the upper energy-absorbing device (28) is such that the energy-absorbing zone (34) of the upper energy absorbing device (32) starts to deform when an axial force measured on the torso of a dummy modelling the driver and impacting the contact zone of the upper energy-absorbing device reaches 1 kN.

14. The driver's desk assembly of any one of the preceding claims, **characterised in that** the lower energy-absorbing device is such that energy-absorbing zone (46) of the lower energy absorbing device starts to deform when an axial force measured on the knees (40) of a dummy modelling the driver and impacting the contact zone (44) of the lower energy-absorbing device (38) reaches 4 kN.

15. The driver's desk assembly of any one of the preceding claims, **characterised in that** the driver's desk assembly is provided with a collision detector and the seat is provided with an actuator for moving the seat towards the desk subassembly upon a collision.

## Patentansprüche

1. Führerstandbaugruppe für ein Schienenfahrzeug, das einen Führersitz (12) und eine Standunterbaugruppe (14) umfasst, die vor dem Führersitz (12) angeordnet ist, wobei die Standunterbaugruppe (14) mit einer Führer-Maschinen-Schnittstelle (22) zum Steuern des Schienenfahrzeugs, zumindest einer unteren energieabsorbierenden Einheit (38), die so angeordnet ist, dass sie den Knien eines Führers zugewandt ist, der auf dem Führersitz (12) sitzt, und zumindest einer oberen energieabsorbierenden Einheit (28) versehen ist, die so angeordnet ist, dass sie dem Oberkörper des auf dem Führersitz (12) sitzenden Führers zugewandt ist, **dadurch gekennzeichnet, dass** zumindest eine der oberen und der unteren energieabsorbierenden Einheit (28, 38) zumindest eine bewegliche Kontaktzone (32, 44), die hin zum auf dem Sitz sitzenden Führer vorsteht, und zumindest eine permanent verformbare energieabsorbierende Zone (34, 46) umfasst, die zwischen der beweglichen Kontaktzone und einem steifen Trägerelement der Führerstandbaugruppe sandwichartig angeordnet ist.

2. Führerstandbaugruppe nach Anspruch 1, **dadurch gekennzeichnet, dass** zumindest eine energieabsorbierende Zone (34, 46) ein Waben- und/oder Metallschaummaterial mit Energieabsoiptionsfähigkeit durch plastische Verformung enthält.

3. Führerstandbaugruppe nach einem der vorstehenden Ansprüche, **dadurch gekennzeichnet, dass** jede bewegliche Kontaktzone (32, 44) ein steifes Element enthält, das mit einem Kissen bedeckt ist, das dem Körper des Führers zugewandt ist.

4. Führerstandbaugruppe nach einem der vorstehenden Ansprüche, **dadurch gekennzeichnet, dass** es darüber hinaus ein Führungsmittel zum Führen der beweglichen Kontaktzone (32, 44) entlang eines rechtlinigen oder krummlinigen Wegs in Bezug auf das steife Trägerelement umfasst.

5. Führerstandbaugruppe nach einem der vorstehenden Ansprüche, **dadurch gekennzeichnet, dass** die obere und die untere energieabsorbierende Einheit unabhängig austauschbar sind.

6. Führerstandbaugruppe (10) nach einem der vorstehenden Ansprüche, **dadurch gekennzeichnet, dass** die untere und die obere energieabsorbierende Einheit (28, 38) derart sind, dass sie die kinetische Energie einer Beinregion (42) und einer Oberkörperregion (30) eines Führers, der aus dem Führersitz (12) gedrückt wird und auf die Standunterbaugruppe aufprallt, bei einem Frontalzusammenstoß zu absorbieren, der einen Abbremsimpuls von 5 g während 100 ms erzeugt, wodurch eine Verformung der beiden separaten energieabsorbierenden Zonen so bewirkt wird, dass eine Krümmung des Körpers des Führers und somit eine Bewegung des Kopfbereichs des Körpers des Führers hin zur Standunterbaugruppe (14) verringert werden.

7. Führerstandbaugruppe nach einem der vorstehenden Ansprüche, **dadurch gekennzeichnet, dass** die beiden energieabsorbierenden Einheiten (28, 38) dissipative Verformungsfähigkeiten, insbesondere plastische Verformungsfähigkeiten, aufweisen, um die Drehung des Oberköiperbereichs (30) des Körpers des Führers in Bezug auf das Becken so zu beschränken, dass das Kopfaufprallkriterium (HIC, Head Impact Criterion) während des Frontalzusammenstoßes weniger als 50 ist.

8. Führerstandbaugruppe nach einem der vorstehenden Ansprüche, **dadurch gekennzeichnet, dass** die energieabsorbierenden Zonen (34, 46) der beiden energieabsorbierenden Einheiten (28, 38) dissipative Verformungsfähigkeiten aufweisen, so dass nur eine Translation des Körpers des Führers während des Zusammenstoßes ermöglicht wird.

9. Führerstandbaugruppe nach einem der vorstehenden Ansprüche, **dadurch gekennzeichnet, dass** die obere energieabsorbierende Zone (34) eine Steifigkeit aufweist, so dass eine Abdomenablenkung und eine Oberkörperablenkung, die anhand eines Dummys gemessen werden, der den Führer darstellt, während des Frontalzusammenstoßes auf weniger als 40 mm bzw. weniger als 63 mm und vorzugsweise auf weniger als 35 mm und weniger als 50 mm beschränkt wird.

10. Führerstandbaugruppe nach einem der vorstehenden Ansprüche, **dadurch gekennzeichnet, dass** die obere energieabsorbierende Einheit (28) auf der Höhe des Oberkörpers (30) und vor dem Oberkörper (30) und/oder des Abdomen und vor dem Abdomen des auf dem Sitz sitzenden Führers angeordnet ist.

11. Führerstandbaugruppe nach einem der vorstehenden Ansprüche, **dadurch gekennzeichnet, dass** die untere energieabsorbierende Einheit eine Position aufweist und die energieabsorbierende Zone (46) eine Steifigkeit aufweist, so dass eine Oberschenkelknochenaxialkraft, die anhand eines Dummys gemessen wird, der den Führer darstellt, auf weniger als 8 kN beschränkt wird.

12. Führerstandbaugruppe nach einem der vorstehenden Ansprüche, **dadurch gekennzeichnet, dass** die untere energieabsorbierende Einheit höhen- und längenverstellbar ist.

13. Führerstandbaugruppe nach einem der vorstehenden Ansprüche, **dadurch gekennzeichnet, dass** die obere energieabsorbierende Einheit (28) derart ist, dass sich die energieabsorbierende Zone (34) der oberen energieabsorbierenden Einheit (32) zu verformen beginnt, wenn eine Axialkraft, die am Oberkörper eines Dummys gemessen wird, der den Führer darstellt und auf die Kontaktzone der oberen energieabsorbierenden Einheit aufprallt, 1 kN erreicht.

14. Führerstandbaugruppe nach einem der vorstehenden Ansprüche, **dadurch gekennzeichnet, dass** die untere energieabsorbierende Einheit derart ist, dass sich die energieabsorbierende Zone (46) der unteren energieabsorbierenden Einheit zu verformen beginnt, wenn eine Axialkraft, die an den Knien (40) eines Dummys gemessen wird, der den Führer darstellt und auf die Kontaktzone (44) der unteren energieabsorbierenden Einheit (38) aufprallt, 4 kN erreicht.

15. Führerstandbaugruppe nach einem der vorstehenden Ansprüche, **dadurch gekennzeichnet, dass** die Führerstandbaugruppe mit einem Zusammenstoßdetektor versehen ist und der Sitz mit einem Aktuator zum Bewegen des Sitzes bei einem Zusammenstoß hin zur Standunterbaugruppe verstehen ist.

## Revendications

1. Ensemble de pupitre de pilotage pour un véhicule ferroviaire, comprenant un siège (12) de conducteur et un sous-ensemble de pupitre de pilotage (14) positionné en face du siège (12) de conducteur, le sous-ensemble de pupitre de pilotage (14) étant pourvu d'une interface conducteur / machine (22) pour commander le véhicule ferroviaire, au moins un dispositif d'absorption d'énergie inférieur (38) positionné de manière à faire face aux genoux d'un conducteur assis sur le siège (12) de conducteur et au moins un dispositif d'absorption d'énergie supérieur (28) positionné de manière à faire face au torse du conducteur assis sur le siège (12) de conducteur, **caractérisé en ce qu'**au moins l'un des dispositifs d'absorption d'énergie supérieur et inférieur (28, 38) comprend au moins une zone de contact mobile (32, 44) faisant saillie vers le conducteur assis sur le siège et au moins une zone d'absorption d'énergie (34, 46) pouvant être déformée de manière permanente, prise en sandwich entre la zone de contact mobile et une partie de support rigide de l'ensemble de pupitre de pilotage de conducteur.

2. Ensemble de pupitre de pilotage de conducteur selon la revendication 1, **caractérisé en ce qu'**au moins une zone d'absorption d'énergie (34, 46) comprend un matériau en nid d'abeille et/ou en mousse métallique avec une capacité d'absorption d'énergie par déformation plastique.

3. Ensemble de pupitre de pilotage de conducteur selon l'une quelconque des revendications précédentes, **caractérisé en ce que** chaque zone de contact mobile (32, 44) comprend un élément rigide recouvert avec un coussin faisant face au corps du conducteur.

4. Ensemble de pupitre de pilotage de conducteur selon l'une quelconque des revendications précédentes, **caractérisé en ce qu'**il comprend en outre des moyens de guidage pour guider la zone de contact mobile (32, 44) le long d'une trajectoire rectiligne ou curviligne par rapport à la partie de support rigide.

5. Ensemble de pupitre de pilotage de conducteur selon l'une quelconque des revendications précédentes, **caractérisé en ce que** les dispositifs d'absorption d'énergie supérieur et inférieur sont indépendamment remplaçables.

6. Ensemble de pupitre de pilotage de conducteur (10) selon l'une quelconque des revendications précédentes, **caractérisé en ce que** les dispositifs d'absorption d'énergie inférieur et supérieur (28, 38) sont tels, qu'ils absorbent, suite à une collision frontale générant une impulsion de décélération de 5 g pendant 100 ms, l'énergie cinétique d'une région de jambe (42) et d'une région de torse (30) d'un conducteur qui est expulsé du siège (12) de conducteur et et qui entre en collision avec le sous-ensemble de pupitre de pilotage, provoquant ainsi une déformation des deux zones d'absorption d'énergie séparées telle qu'une flexion du corps du conducteur et par conséquent un mouvement d'une région de tête du corps du conducteur vers le sous-ensemble de pupitre de pilotage (14) sont réduits.

7. Ensemble de pupitre de pilotage de conducteur selon l'une quelconque des revendications précédentes, **caractérisé en ce que** les deux dispositifs d'absorption d'énergie (28, 38) ont des capacités de déformation dissipatives, en particulier des capacités de déformation plastique, propres à limiter la rotation de la région de torse (30) du corps du conducteur par rapport au bassin de sorte que le critère de blessures à la tête (HIC) est inférieur à 50 pendant la collision frontale.

8. Ensemble de pupitre de pilotage de conducteur selon l'une quelconque des revendications précédentes, **caractérisé en ce que** les zones d'absorption d'énergie (34, 46) des deux dispositifs d'absorption d'énergie (28, 38) ont des capacités de déformation dissipatives propre à ne permettre qu'une translation du corps du conducteur pendant la collision.

9. Ensemble de pupitre de pilotage de conducteur selon l'une quelconque des revendications précédentes, **caractérisé en ce que** la zone d'absorption d'énergie supérieure (34) a une rigidité propre à limiter une déflexion de l'abdomen et une déflexion thoracique mesurées sur un mannequin représentant le conducteur, respectivement à une valeur inférieure à 40 mm et inférieure à 63 mm, et de préférence respectivement inférieure à 35 mm et inférieure à 50 mm pendant la collision frontale.

10. Ensemble de pupitre de pilotage de conducteur selon l'une quelconque des revendications précédentes, **caractérisé en ce que** le dispositif d'absorption d'énergie supérieur (28) est positionné à la hauteur et en face du torse (30) et/ou de l'abdomen du conducteur assis sur le siège.

11. Ensemble de pupitre de pilotage de conducteur selon l'une quelconque des revendications précédentes, **caractérisé en ce que** le dispositif d'absorption d'énergie inférieur a une position et la zone d'absorption d'énergie (46) a une rigidité propre à limiter une force axiale de fémur, mesurée sur un mannequin représentant le conducteur, à une valeur inférieure à 8 kN.

12. Ensemble de pupitre de pilotage de conducteur selon l'une quelconque des revendications précédentes, **caractérisé en ce que** le dispositif d'absorption d'énergie inférieur est ajustable en hauteur et en longueur.

13. Ensemble de pupitre de pilotage de conducteur selon l'une quelconque des revendications précédentes, **caractérisé en ce que** le dispositif d'absorption d'énergie supérieur (28) est tel que la zone d'absorption d'énergie (34) du dispositif d'absorption d'énergie supérieur (32) commence à se déformer lorsqu'une force axiale mesurée sur le torse d'un mannequin représentant le conducteur et entrant en collision avec la zone de contact du dispositif d'absorption d'énergie atteint 1 kN.

14. Ensemble de pupitre de pilotage de conducteur selon l'une quelconque des revendications précédentes, **caractérisé en ce que** le dispositif d'absorption d'énergie inférieur est tel que la zone d'absorption d'énergie (46) du dispositif d'absorption d'énergie inférieur commence à se déformer lorsqu'une force axiale mesurée sur les genoux (40) d'un mannequin représentant le conducteur et entrant en collision avec la zone de contact (44) du dispositif d'absorption d'énergie (38) atteint 4 kN.

15. Ensemble de pupitre de pilotage de conducteur selon l'une quelconque des revendications précédentes, **caractérisé en ce que** l'ensemble de pupitre de pilotage de conducteur est pourvu d'un détecteur de collision et le siège est pourvu d'un actionneur pour déplacer le siège vers le sous-ensemble de pupitre de pilotage suite à une collision.
